# EUROPEAN PATENT APPLICATION

(11) **EP 4 668 125 A1**
(43) Date of publication of application: **24.12.2025**
(21) Application number: 24925440.0
(22) Date of filing: 24.07.2024
(51) Int. Cl.: G06F 16/16, G06F 3/04817, G06F 3/0486

(54) **INFORMATION GENERATION METHOD AND APPARATUS, AND ELECTRONIC DEVICE AND COMPUTER-READABLE MEDIUM**

(30) Priority: 21.02.2024 CN 202410193556
(71) Applicant: Baidu.com Times Technology (Beijing) Co., Ltd., Beijing 100080 (CN)
(72) Inventor: DENG, Simin, Beijing 100080 (CN); CHEN, Rensong, Beijing 100080 (CN); WANG, Qizheng, Beijing 100080 (CN); LIU, Hongyan, Beijing 100080 (CN); YANG, Youcun, Beijing 100080 (CN); YUAN, Yi, Beijing 100080 (CN); SHEN, Haoyu, Beijing 100080 (CN); YANG, Chenhui, Beijing 100080 (CN); SUN, Zengwang, Beijing 100080 (CN); ZHANG, Li, Beijing 100080 (CN); LUO, Xu, Beijing 100080 (CN); MA, Rui, Beijing 100080 (CN); MA, Ruiqiang, Beijing 100080 (CN); ZHU, Yuxi, Beijing 100080 (CN)
(74) Representative: Lucke, Andreas
(86) International application number: PCT/CN2024/107297
(87) International publication number: WO 2025/175698

(57) **Abstract**

The present disclosure relates to the technical field of artificial intelligence, specifically the technical fields such as natural language processing, computer vision and deep learning. Provided are an information generation method and apparatus. The specific implementation solution comprises: acquiring a selected file obtained after a user has selected at least one type of file; in response to detecting that there is a graph carrier document on a current display interface, acquiring operation information of the user on the selected file in real time; on the basis of the operation information, determining a falling position of the selected file relative to a file upload hotspot, wherein the file upload hotspot is an area where the graph carrier document is displayed; and on the basis of the falling position and the selected file, optimizing the graph carrier document to obtain an optimized graph carrier document. The embodiment improves user experience.

## Description

### CROSS-REFERENCE TO RELATED APPLICATIONS

This application claims priority to Chinese Patent Application No. 202410193556.0, filed with the China National Intellectual Property Administration (CNIPA) on February 21, 2024, titled "Method and Apparatus for Generating information, Electronic Device, and Computer Readable Medium," the entire content of which is incorporated herein by reference.

### TECHNICAL FIELD

The present disclosure relates to the field of artificial intelligence technologies, and more particularly to technical fields such as natural language processing, computer vision, and deep learning. Specifically, the present disclosure relates to a method and apparatus for generating information, an electronic device, a computer-readable medium, and a computer program product.

### BACKGROUND

In scenarios involving information collection and organization in daily life, study, and work, there are currently many types of information carriers, including files in different formats such as Word, Excel, PDF (Portable Document Format), PPT (Microsoft Office PowerPoint), and TXT (plain-text files). At present, when users obtain information, they need to manually organize files: by reading information from different files, they spend a lot of time manually deduplicating and merging information, and also need to analyze the relationships between different elements and between elements and the whole, finally sorting out the desired information. This process is extremely time-consuming and labor-intensive, and easily leads to information omissions.

### SUMMARY

The present disclosure provides a method and apparatus for generating information, an electronic device, a computer-readable non-transitory storage medium, and a computer program product.

According to a first aspect, the present disclosure provides a method for generating information, the method including:
acquiring a file selected by a user from at least one type of file;
acquiring in real time operation information of the user on the selected file, in response to detecting that a graph carrier document is presented on a current display interface;
determining, based on the operation information, a drop position of the selected file relative to a file upload hot zone, where the file upload hot zone is a region in which the graph carrier document is displayed; and
optimizing the graph carrier document based on the drop position and the selected file to obtain an optimized graph carrier document.

According to a second aspect, the present disclosure provides an apparatus for generating information, the apparatus including: a file acquisition unit configured to acquire a file selected by a user from at least one type of file ;an information acquisition unit configured to, in response to detecting that a graph carrier document is presented on the current display interface, acquire in real time operation information of the user on the selected file; a determination unit configured to determine, based on the operation information, a drop position of the selected file relative to a file upload hot zone, where the file upload hot zone is a region where the graph carrier document is displayed; and an optimization unit configured to optimize the graph carrier document based on the drop position and the selected file to obtain an optimized graph carrier document.

According to a third aspect, the present disclosure provides an electronic device, the electronic device including:
at least one processor; and
a memory communicatively connected to the at least one processor,
where the memory stores instructions executable by the at least one processor, and the instructions are executed by the at least one processor to enable the at least one processor to perform the method described in any implementation of the first aspect.

According to a fourth aspect, the present disclosure provides a non-transitory computer-readable storage medium storing computer instructions, where the computer instructions are used to cause a computer to perform the method described in any implementation of the first aspect.

According to a fifth aspect, the present disclosure provides a computer program product, including a computer program, where the computer program, when executed by a processor, implements the method described in any implementation of the first aspect.

The method and apparatus for generating information provided by the embodiments of the present disclosure first acquire a file selected by a user from at least one type of file; second, in response to detecting that a graph carrier document is presented on the current display interface, acquire in real time operation information of the user on the selected file; third, determine, based on the operation information, a drop position of the selected file relative to a file upload hot zone (the file upload hot zone being a region where the graph carrier document is displayed); and finally, optimize the graph carrier document based on the drop position and the selected file to obtain an optimized graph carrier document. In this way, by means of the drop position of the selected file relative to the file upload hot zone and the selected file, the pre-generated graph carrier document is optimized, thereby consolidating information from multiple types of files, improving the richness of the optimized graph carrier document, and ensuring the comprehensiveness of generating information for the graph carrier document.

It should be understood that the content described in this section is not intended to identify key or essential features of the embodiments of the present disclosure, nor is it intended to limit the scope of the present disclosure. Other features of the present disclosure will become readily understood through the following description.

### BRIEF DESCRIPTION OF THE DRAWINGS

The accompanying drawings are used for better understanding of the solution and do not constitute a limitation to the present disclosure.
FIG. 1 is a flowchart of a method for generating information according to an embodiment of the present disclosure;
FIG. 2 is a schematic structural diagram of generating a graph carrier document according to the present disclosure;
FIGS. 3A and 3B are schematic structural diagrams of displaying selected files associated with nodes according to the present disclosure;
FIG. 4 is a schematic structural diagram of an apparatus for generating information according to an embodiment of the present disclosure;
FIG. 5 is a block diagram of an electronic device adapted to implement the method for generating information according to an embodiment of the present disclosure.

### DETAILED DESCRIPTION

The following describes exemplary embodiments of the present disclosure with reference to the accompanying drawings, which include various details of the embodiments of the present disclosure to facilitate understanding and should be regarded as merely exemplary. Therefore, those of ordinary skill in the art should recognize that various changes and modifications can be made to the embodiments described herein without departing from the scope and spirit of the present disclosure. Similarly, for clarity and conciseness, descriptions of well-known functions and structures are omitted in the following description.

In the present embodiment, the terms "first" and "second" are used merely for descriptive purposes and shall not be construed as indicating or implying relative importance or implicitly indicating the number of indicated technical features. Thus, a feature defined with "first" or "second" may explicitly or implicitly include at least one such feature.

In scenarios involving information collection and organization in daily life, study, and work, there is currently no one-stop method for merging content across multiple file types to extract information and intelligently optimize mind maps, flowcharts, document summaries, or PPT presentations. In conventional technologies, users need to manually manage files of different types, and extract and organize information by manually reading, comparing, merging, and sorting through different file types. This operation is time-consuming and labor-intensive, and also prone to omissions of key information.

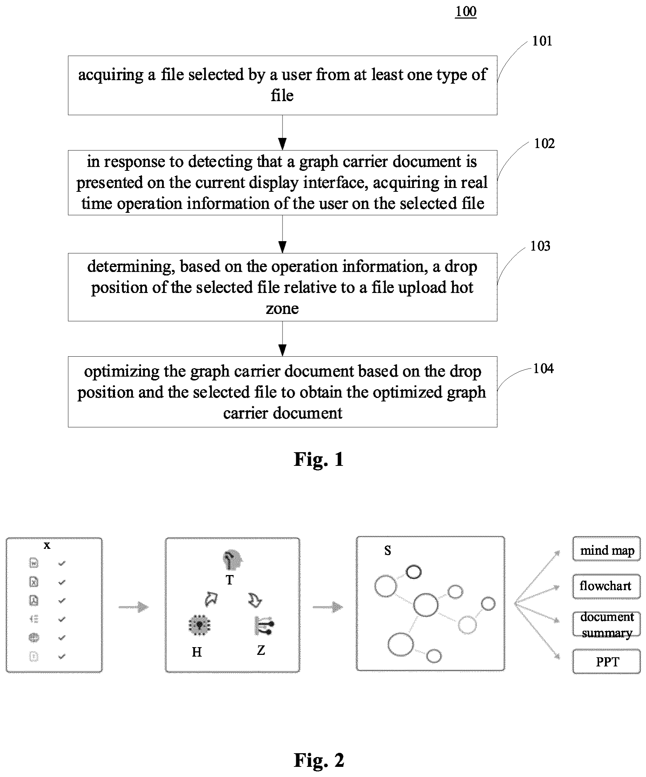

To address the problem of poor user experience in conventional technologies, the present disclosure provides a method for generating information. As shown in FIG. 1, which illustrates a flow 100 of a method for generating information according to an embodiment of the present disclosure, the method for generating information includes the following steps.

Step 101 includes: acquiring a file selected by a user from at least one type of file.

In the present embodiment, an executing entity on which the method for generating information runs may monitor a file display area on a display interface, determine a user selection operation (e.g., clicking, selecting) on at least one type of file in the file display area, and determine a selected file based on the selection operation. The selected file may be one type of file or multiple types of files, and may be a single file or multiple files.

In the present embodiment, a user may upload at least one type of file (such as Word, Excel, PDF, PPT, or TXT) to the file display area, and then select multiple files for merging to obtain the selected file.

Optionally, in addition to the above manner of obtaining the selected file, the executing entity on which the method for generating information runs also supports the user to paste an online public library link to participate in multi-file merging. After the user adds the online public library link to the multiple files to be merged, the executing entity first parses and extracts the information content in the link, and uniformly consolidates all information to be merged to obtain the selected file.

Step 102 includes: in response to detecting that a graph carrier document is presented on the current display interface, acquiring in real time operation information of the user on the selected file.

In the present embodiment, the graph carrier document is a document related to knowledge graphs (also referred to as a graph-type carrier document), and the current display interface is used to present the content of the graph carrier document. Specifically, the graph carrier document includes a mind map, a flowchart, a document summary, a PPT, or the like.

In the present embodiment, the operation information includes a drag operation, a release operation, and a release region corresponding to the release operation. The above Step 102 includes: in response to detecting that a graph carrier document is presented on the current display interface, detecting whether the operation information includes a drag operation on the selected file; in response to the operation information including a drag operation, detecting whether a release operation follows the drag operation; and in response to detecting that a release operation follows the drag operation, determining a release region corresponding to the release operation.

Step 103 includes: determining, based on the operation information, a drop position of the selected file relative to a file upload hot zone.

In the present embodiment, the file upload hot zone is a region where the graph carrier document is displayed.

In the present embodiment, the above operation information includes a release region of the selected file when the selected file is operated. The above Step 103 includes: detecting whether the release region is located within the file upload hot zone; and in response to the release region being located within the file upload hot zone, determining that the drop position of the selected file relative to the file upload hot zone is within the file upload hot zone.

The above Step 103 may further include: in response to the release region not being located within the file upload hot zone, determining that the drop position of the selected file relative to the file upload hot zone is outside the file upload hot zone.

Step 104 includes: optimizing the graph carrier document based on the drop position and the selected file to obtain the optimized graph carrier document.

In the present embodiment, the above Step 104 includes: in response to the drop position being located within the file upload hot zone, extracting node information from the selected file, and supplementing nodes or node information related to the graph carrier document (from the extracted information) into the graph carrier document to obtain the optimized graph carrier document.

The method for generating information provided by the embodiment of the present disclosure first acquires a file selected by a user from at least one type of file; second, in response to detecting that a graph carrier document is presented on the current display interface, acquires in real time operation information of the user on the selected file; third, determines, based on the operation information, a drop position of the selected file relative to a file upload hot zone (the file upload hot zone being a region where the graph carrier document is displayed); and finally, optimizes the graph carrier document based on the drop position and the selected file to obtain the optimized graph carrier document. In this way, by means of the drop position of the selected file relative to the file upload hot zone and the selected file itself, the pre-generated graph carrier document is optimized, thereby consolidating information from multiple types of files, improving the richness of the optimized graph carrier document, and ensuring the comprehensiveness of generating information for the graph carrier document.

In some embodiments of the present disclosure, the method for generating information further includes: in response to detecting that no graph carrier document is presented on the current display interface, generating a file upload hot zone on the current display interface; acquiring in real time operation information of the user on the selected file; determining a drop region of the selected file relative to the file upload hot zone based on the operation information; in response to detecting that the drop region matches the region where the file upload hot zone is located, generating a graph carrier document based on the selected file; and displaying the graph carrier document in the file upload hot zone.

In the present embodiment, the file upload hot zone is a region for displaying the graph carrier document. The executing entity on which the method for generating information runs performs information extraction, merging, and document format generation on the selected file to obtain the graph carrier document, and displays the graph carrier document in the file upload hot zone.

In the present embodiment, the operation information includes a drop region of the selected file. The executing entity compares the drop region of the selected file with the region where the file upload hot zone is located; when the drop region of the selected file overlaps with the region where the file upload hot zone is located, determines that the drop region matches the region where the file upload hot zone is located; and in this case determines that the user intends to place the selected file into the file upload hot zone, thereby generating the graph carrier document.

The method for generating information provided by the present disclosure generates a file upload hot zone on the current display interface when no graph carrier document is presented on the current display interface; when it is determined, based on the user operation information, that the drop region corresponding to the selected file matches the file upload hot zone, the method generates and displays the graph carrier document based on the selected file. This realizes content analysis and merging of different types of files, and finally intelligently generates the graph carrier document from the analyzed and consolidated information, providing a reliable implementation for generating the graph carrier document.

Optionally, in some embodiments of the present disclosure, the method for generating information further includes: associating each node in the graph carrier document with the selected file; and when a user operates a tracking tag of an information source of a node, displaying the selected file associated with the node.

Optionally, in some embodiments of the present disclosure, the method for generating information further includes: when a user operates an intelligent material recommendation tag of a node, displaying a search information box to the user; acquiring to-be-queried information of the user through the search information box; searching all types of files based on the to-be-queried information to obtain a search result; and displaying the search result.

Optionally, in some embodiments of the present disclosure, the method for generating information further includes: when a user operates a real-time online search tag of a node, displaying a search information box to the user; acquiring online query information of the user through the search information box; searching the Internet based on the online query information to obtain an online result; and displaying the online result.

In some embodiments of the present disclosure, the "in response to detecting that the drop region matches the region where the file upload hot zone is located, generating a graph carrier document based on the selected file" includes: in response to detecting that the drop region matches the region where the file upload hot zone is located, inputting the selected file and a carrier guide word into a large language model to obtain the graph carrier document output by the large language model.

In this optional implementation, the carrier guide word is a guide word generated for the large language model to instruct the large language model to generate the graph carrier document. Optionally, the carrier guide word may be generated based on user requirement. For example, when the user needs to generate a mind map, the carrier guide word instructs the large language model to generate a mind map.

In this optional implementation, the carrier guide word includes a word pre-setting the identity role of the large language model (e.g., a senior text research expert with strong knowledge acquisition and integration capabilities) and a task objective description word, where the task objective description word is used to propose requirements to the large language model regarding information retention rate, overlap rate, relevance, structured output, logical rigor, etc., for document merging.

In this optional implementation, after obtaining the carrier guide word, the large language model analyzes the selected file according to the instructions of the carrier guide word, and determines and generates the graph carrier document guided by the carrier guide word.

The method for obtaining the graph carrier document provided by the present embodiment uses the selected file, the carrier guide word, and the large language model to obtain the graph carrier document, improving the stability of graph carrier document generation.

Optionally, before the step of "in response to detecting that the drop region matches the region where the file upload hot zone is located, generating a graph carrier document based on the selected file", the method for generating information further includes: performing data preprocessing on the selected file, where the data preprocessing includes: extracting file information to be merged from the selected file; removing illegal character strings and meaningless characters from the extracted file information; and merging the extracted file information removing the illegal character strings and meaningless characters into a single document format (e.g., Markdown, a lightweight markup language).

Optionally, the step of "in response to detecting that the drop region matches the region where the file upload hot zone is located, generating a graph carrier document based on the selected file" includes: in response to detecting that the drop region matches the region where the file upload hot zone is located, extracting nodes of the graph carrier document and relationship information between the nodes from the selected file; and combining the extracted nodes and relationship information according to the format of the graph carrier document to obtain the graph carrier document.

In some optional implementations of the present disclosure, the step of "in response to detecting that the drop region matches the region where the file upload hot zone is located, generating a graph carrier document based on the selected file" includes: in response to detecting that the drop region matches the region where the file upload hot zone is located, inputting the selected file and a graph guide word into a large language model to obtain a knowledge graph output by the large language model; acquiring carrier requirement information input by the user; and generating the graph carrier document based on the knowledge graph and the carrier requirement information.

In this optional implementation, the executing entity on which the method for generating information runs invokes the large language model to perform information parsing and knowledge extraction on the content of the selected file, and deduplicate and merge the information into a unified information set (e.g., H in FIG. 2); the large language model extracts the association logic between different entity elements in the information set (e.g., T in FIG. 2), and reorganizes the information set in a structured manner (e.g., Z in FIG. 2). The structured reorganization of the information set includes: enabling the large language model to determine whether there is a logical conflict; if there is a logical conflict, enabling the large language model to evaluate the information in terms of reliability, authenticity, logical rigor, etc.; when there is a significant difference in scores, selecting the information with a higher score and deleting the information with a lower score; if there is no significant difference in scores, enabling the large language model to evaluate based on the overall quality score of the original file corresponding to the information source, and selecting the one with a higher score.

In the present embodiment, when the association logics of different file information pieces in the selected file are inconsistent, the large language model further scores the credibility and qualities of association logics, and finally adopts the association logic with a higher score. The main basis for the large language model to score is the existing knowledge reserve of the large language model; specifically, the specific scoring process of the large language model is: first determining whether the information involves timeliness; if it does, invoking part of the online real-time search capability; if it does not, making a judgment based on the knowledge reserve of the large language model.

The extracting the association logic between different entity elements in the information set includes: extracting entities, attributes, and relationships from the information set; inductively organizing these knowledge elements; and gradually abstracting the knowledge elements into concepts to form a schema layer. After the knowledge is fused, the system performs quality evaluation (some requiring manual participation in identification), and finally adds the qualified part to the knowledge graph.

After the above information processing, the large language model may intelligently generate different types of graph carrier documents based on the knowledge graph and the carrier requirement information.

In this optional implementation, the carrier requirement information is information related to the graph carrier document, and the type of the graph carrier document may be determined through the carrier requirement information. For example, if the carrier requirement information requires the generated graph carrier document to be a mind map, the carrier requirement information is information indicating the generation of a mind map; another example is that if the carrier requirement information requires the generated graph carrier document to be a flowchart, the carrier requirement information is information indicating the generation of a flowchart.

As shown in FIG. 2, based on the understanding and analysis of all file contents of the selected file X by the large language model, the system intelligently organizes materials to generate a knowledge graph S of the multi-file information set, and intelligently generates a mind map, a flowchart, a document summary, or a PPT.

The method for generating the graph carrier document provided by this optional implementation first obtains a knowledge graph through a large language model when the drop region matches the region where the file upload hot zone is located, and then generates the graph carrier document based on the carrier requirement information input by the user and the knowledge graph. This enables the large language model to obtain the relationship information of nodes in the corresponding graph carrier document through the knowledge graph, improving the reliability of graph carrier document generation and providing another reliable implementation for generating the graph carrier document.

Optionally, before inputting the selected file and the graph guide word into the large language model to obtain the knowledge graph output by the large language model, the method for generating information further includes: performing data preprocessing on the selected file, where the data preprocessing includes: extracting file information to be merged from the selected file; removing illegal character strings and meaningless characters from the extracted information; and merging the processed information into a single document format.

In some optional implementations of the present disclosure, the step of "generating the graph carrier document based on the knowledge graph and the carrier requirement information" includes: generating requirement guide words based on the carrier requirement information; and inputting the requirement guide words and the knowledge graph into the large language model to obtain the graph carrier document output by the large language model.

In this optional implementation, the carrier requirement information is requirement information for the graph carrier document uploaded by the user. For example, the carrier requirement information may be that the graph carrier document to be generated is a mind map; another example is that the carrier requirement information may be that the graph carrier document to be generated is a flowchart.

The method for generating the graph carrier document provided by this optional implementation generates a requirement guide word based on the carrier requirement information, and inputs the requirement guide word and the knowledge graph into the large language model. This enables the large language model to reorganize the knowledge in the knowledge graph based on understanding the user requirement, thereby obtaining the graph carrier document and improving the reliability of obtaining the graph carrier document.

Optionally, the generating the graph carrier document based on the knowledge graph and the carrier requirement information includes: inputting the carrier requirement information and the knowledge graph into the large language model to obtain the graph carrier document output by the large language model.

In some optional implementations of the present disclosure, the optimizing the graph carrier document based on the drop position and the selected file to obtain an optimized graph carrier document includes: in response to detecting that the drop position is located in a blank area of the file upload hot zone, supplementing the entire document information of the graph carrier document based on the selected file to obtain the optimized graph carrier document.

In this optional implementation, the file upload hot zone includes a document display area and a blank area of the graph carrier document, where the document display area is the area where the existing graph carrier document is located, and is used to present each node, node information, and relationships between nodes of the graph carrier document to the user; the blank area is the area in the file upload hot zone where the graph carrier document is not displayed. When the drop position is in the blank area, it indicates that the entire document information of the graph carrier document needs to be supplemented to obtain the optimized graph carrier document.

In this optional implementation, "supplementing the entire document information of the graph carrier document" refers to expanding the information of each information unit in the graph carrier document. For example, if the graph carrier document is a mind map, supplementing the entire document information of the graph carrier document refers to expanding the nodes or node information in the mind map, so that the expanded graph carrier document is the optimized graph carrier document.

The method for obtaining the optimized graph carrier document provided by this optional implementation supplements the entire document information of the graph carrier document based on the selected file when detecting that the drop position is located in the blank area of the file upload hot zone, thereby obtaining the optimized graph carrier document and improving the optimization effect of the graph carrier document.

Optionally, the optimizing the graph carrier document based on the drop position and the selected file to obtain the optimized graph carrier document includes: in response to detecting that the drop position is located in an area outside the file upload hot zone, supplementing the entire document information of the graph carrier document based on the selected file to obtain the optimized graph carrier document.

Optionally, the optimizing the graph carrier document based on the drop position and the selected file to obtain an optimized graph carrier document includes: in response to detecting that the drop position is located in a non-node position of the graph carrier document (e.g., on the edge between nodes), supplementing the entire document information of the graph carrier document based on the selected file to obtain the optimized graph carrier document.

In some embodiments of the present disclosure, the step of "in response to detecting that the drop position is located in the blank area of the file upload hot zone, supplementing the entire document information of the graph carrier document based on the selected file to obtain the optimized graph carrier document" includes: in response to detecting that the drop position is located in the blank area of the file upload hot zone, expanding each original node on the graph carrier document based on the selected file to obtain an expanded node of each original node; removing duplicated expanded nodes of original nodes based on information of the original nodes to obtain non-duplicate expanded nodes of the original nodes; and adding the non-duplicate nodes of the original node to the graph carrier document to obtain the optimized graph carrier document, in response to determining an original node with a largest number of non-duplicate nodes having a highest quality.

In this optional implementation, the original nodes on the graph carrier document are information units of the graph carrier document. For example, if the graph carrier document is a mind map, the original nodes may include a central node, node 1, node 2, node 3, etc., which have connection relationships-where the central node to node 1 is one branch, and the central node to node 2 is another branch.

In this optional implementation, "expanding the original node" refers to performing a child node expansion for any node in the graph carrier document to obtain an expanded branch corresponding to the node; the "removing duplicated expanded nodes of original nodes based on information of the original nodes" refers to: for each node that has undergone child node expansion, checking whether the child nodes on all expanded branches of the node have duplicate nodes or duplicate node information with the nodes on the currently expanded graph carrier document; and in response to there being duplicate nodes or duplicate node information in the expanded child nodes, removing the duplicate nodes or duplicate node information.

In this optional implementation, the non-duplicate nodes are the latest expanded nodes related to the original nodes, and the non-duplicate nodes are nodes with no duplicate nodes or duplicate node information. The numbers of non-duplicate nodes of the original node are obtained by accumulating the non-duplicate nodes on respective branches of the original node; the numbers of the non-duplicate nodes of the original node are calculated by a corresponding quality formula (e.g., an information entropy formula). In this way, the numbers and qualities of the non-duplicate nodes of the original node can be determined, and the non-duplicate nodes of the original node in the branch with the largest number and the highest quality are added to the graph carrier document to obtain the optimized graph carrier document.

The method for supplementing the entire document information of the graph carrier document provided by the present embodiment expands each original node on the graph carrier document to obtain expanded nodes, removing duplicated expanded nodes, and when there is an original node whose non-duplicate nodes have the largest number and the highest quality, adds the non-duplicate nodes of this original node to the graph carrier document to obtain the optimized graph carrier document.

Optionally, the step of "in response to detecting that the drop position is located in a blank area of the file upload hot zone, supplementing the entire document information of the graph carrier document based on the selected file to obtain the optimized graph carrier document" includes: in response to detecting that the drop position is located in the blank area of the file upload hot zone, expanding each original node on the graph carrier document based on the selected file to obtain an expanded node of each original node; removing duplicated expanded nodes of original nodes based on information of the original nodes to obtain non-duplicate expanded nodes of the original nodes; and adding the non-duplicate nodes of all original nodes to the graph carrier document to obtain the optimized graph carrier document.

In some optional implementations of the present disclosure, the step of "optimizing the graph carrier document based on the drop position and the selected file to obtain an optimized graph carrier document" includes: in response to detecting that the drop position is located at the position of a node of the graph carrier document in the file upload hot zone, adding corresponding child nodes to the node based on the selected file to obtain the optimized graph carrier document.

In this optional implementation, the optimized graph carrier document includes at least one node and the association relationships between the nodes. The graph carrier document displayed in the file upload hot zone may display all nodes of the graph carrier document, and thus each node has a corresponding node position. When the drop position is the same as the position of a node, it may be determined that the user only wants to expand the information of the node at this position; therefore, the executing entity may analyze the information related to the node in the selected file, extract child nodes from the information related to the node, and add the corresponding child nodes to the node.

In this optional implementation, the step of "adding corresponding child nodes to the node based on the selected file to obtain the optimized graph carrier document" includes: determining file information related to the information of the node based on the selected file; performing node information processing on the file information to obtain child nodes; and adding the child nodes to the branch connected to the node to obtain the optimized graph carrier document.

The method for obtaining the optimized graph carrier document provided by this optional implementation adds child nodes to a node based on the selected file when the drop position is located at the position of the node of the graph carrier document in the file upload hot zone, providing a reliable implementation for obtaining the optimized graph carrier document.

In some embodiments of the present disclosure, the method for generating information further includes: associating each node in the optimized graph carrier document with the selected file; and when a user operates a tracking tag of an information source of a node, displaying the selected file associated with the node.

In the present embodiment, "associating a node with the selected file" refers to determining the selected file from which the node information is derived, and associating the node with this selected file.

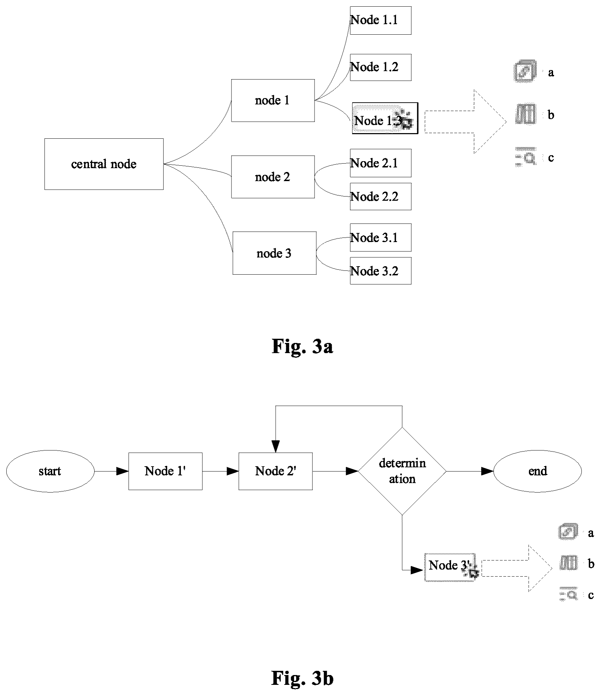

In the present embodiment, the manner of associating a node with the selected file varies depending on the type of the optimized graph carrier document. As shown in FIGS. 3A and 3B, the user selects different nodes and performs different operations on different tags of the nodes; through these operations, the selected file associated with the node is displayed (not shown in the figures) to achieve the purpose of information source tracking. Specifically, the graph carrier document shown in FIG. 3A is a mind map, and the nodes in the mind map include a central node, node 1, node 2, node 3, node 1.1, node 1.2, node 1.3, node 2.1, node 2.2, node 3.1, and node 3.2-where node 1, node 2, and node 3 are child nodes of the central node; node 1.1, node 1.2, and node 1.3 are child nodes of node 1; node 2.1 and node 2.2 are child nodes of node 2; and node 3.1 and node 3.2 are child nodes of node 3. In FIG. 3A, the user clicks (e.g., single-click or double-click) node 1.3 to select node 1.3, and a tracking tag of an information source "a" may be displayed at this time. The graph carrier document shown in FIG. 3B is a flowchart, and the nodes in the flowchart include "Start", node 1', node 2', node 3', "determination", and "end". In FIG. 3B, the user clicks node 3' to select node 3', and a tracking tag"a" of an information source of node 3' may be displayed at this time.

In the present embodiment, operating a tracking tag of an information source of the node includes: in response to receiving a user operation on the node, displaying the tracking tag of the information source of the node (e.g., "a" in FIGS. 3A and 3B); and in response to receiving the user operation on the tracking tag of the information source, determining that the user has operated the tracking tag of the information source of the node.

The method for generating information provided by the embodiment of the present disclosure associates each node in the optimized graph carrier document with the selected file, and displays the selected file associated with the node when the user operates the tracking tag of the information source of the node, improving the comprehensiveness of the user's information acquisition.

Optionally, while displaying the tracking tag of the information source, an intelligent material recommendation tag for each node is also displayed synchronously. The method for generating information further includes: when a user operates the intelligent material recommendation tag of a node (e.g., "b" in FIGS. 3A and 3B), displaying a search information box to the user; acquiring to-be-queried information of the user through the search information box; searching all types of files based on the to-be-queried information to obtain a search result; and displaying the search result.

Optionally, while displaying the tracking tag of the information source, a real-time online search tag for each node is also displayed synchronously. The method for generating information further includes: when a user operates the real-time online search tag of a node (e.g., "c" in FIGS. 3A and 3B), displaying a search information box to the user; acquiring online query information of the user through the search information box; searching the Internet based on the online query information to obtain an online result; and displaying the online result.

The method for generating information provided by the present disclosure may view the citation source of the node information through a dual-link function, and may jump to an information detail page to view the context of the node. At the same time, the user may request the document library platform to provide intelligent material recommendations, full-network searches, and real-time online searches for the node information, expanding more real-time and comprehensive supplementary information for the node and bringing more inspiration.

The method for generating information provided by the present disclosure may quickly realize reading of multiple files of multiple types, information merging, element extraction, information organization, and visualized graph presentation. Taking the consolidation of information from 6 documents as an example: if the manual reading time is calculated as 20 minutes per document, the full-process operation takes 20×6 = 120 minutes (i.e., 2 hours); comparative analysis takes 1 hour; and finally, manually retyping and reorganizing the information takes more than 2 hours. The entire process takes at least 5 hours. However, with the method for generating information of the present disclosure, the operation time required for file upload and final content generation is less than 2 minutes, saving information processing time. At the same time, the convenient material recommendation capability and real-time retrieval capability can help the user expand richer and more effective information, bringing more inspiration.

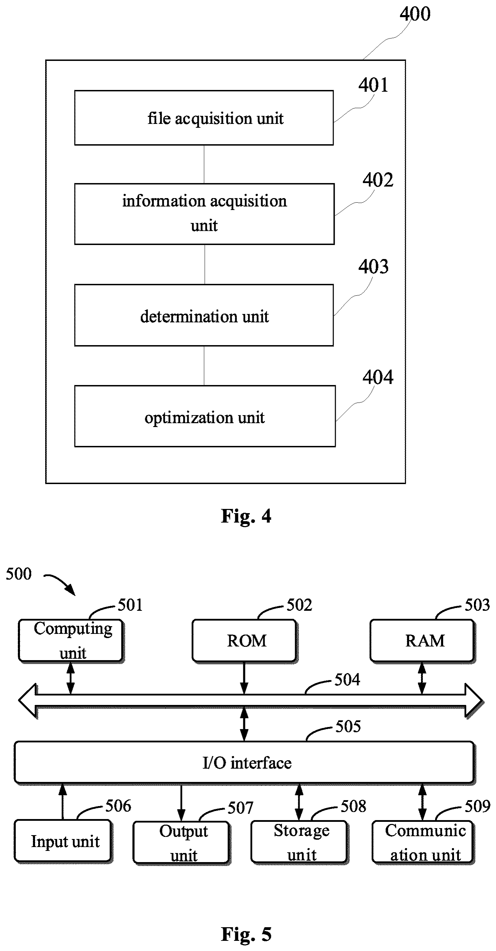

With further reference to FIG. 4, as an implementation of the methods shown in the above figures, the present disclosure provides an embodiment of an apparatus for generating information. This apparatus embodiment corresponds to the method embodiment shown in FIG. 1, and the apparatus can be specifically applied to various electronic devices.

As shown in FIG. 4, the apparatus 400 for generating information provided by the present embodiment includes: a file acquisition unit 401, an information acquisition unit 402, a determination unit 403, and an optimization unit 404. The file acquisition unit 401 is configured to acquire a file selected by a user from at least one type of file; the information acquisition unit 402 is configured to acquire in real time operation information of the user on the selected file, in response to detecting that a graph carrier document is presented on a current display interface; the determination unit 403 is configured to determine, based on the operation information, a drop position of the selected file relative to a file upload hot zone (the file upload hot zone being a region where the graph carrier document is displayed); and the optimization unit 404 is configured to optimize the graph carrier document based on the drop position and the selected file to obtain an optimized graph carrier document.

In the present embodiment, the specific processing of the file acquisition unit 401, the information acquisition unit 402, the determination unit 403, and the optimization unit 404 in the apparatus 400 for generating information and the technical effects brought thereby may be respectively referred to the relevant descriptions of Step 101, Step 102, Step 103, and Step 104 in the corresponding embodiment of FIG. 1, and will not be repeated here.

In some optional implementations of the present embodiment, the apparatus further includes a generation unit (not shown in the figure), which is configured to: in response to detecting that no graph carrier document is presented on the current display interface, generate a file upload hot zone on the current display interface; acquire in real time operation information of the user on the selected file; determine a drop region of the selected file relative to the file upload hot zone based on the operation information; in response to detecting that the drop region matches the region where the file upload hot zone is located, generate a graph carrier document based on the selected file; and display the graph carrier document in the file upload hot zone.

In some optional implementations of the present embodiment, the generation unit is further configured to: in response to detecting that the drop region matches the region where the file upload hot zone is located, input the selected file and a carrier guide word into a large language model to obtain the graph carrier document output by the large language model.

In some optional implementations of the present embodiment, the generation unit is further configured to: in response to detecting that the drop region matches the region where the initial upload zone is located, input the selected file and a graph guide word into a large language model to obtain a knowledge graph output by the large language model; acquire carrier requirement information input by the user; and generate the graph carrier document based on the knowledge graph and the carrier requirement information.

In some optional implementations of the present embodiment, the generation unit is further configured to: generate a requirement guide word based on the carrier requirement information; and input the requirement guide word and the knowledge graph into the large language model to obtain the graph carrier document output by the large language model.

In some optional implementations of the present disclosure, the optimization unit is configured to: in response to detecting that the drop position is located in a blank area of the file upload hot zone, supplement the entire document information of the graph carrier document based on the selected file to obtain the optimized graph carrier document.

In some optional implementations of the present disclosure, the optimization unit is further configured to: in response to detecting that the drop position is located in the blank area of the file upload hot zone, expand each original node on the graph carrier document based on the selected file to obtain an expanded node of each original node; remove duplicated expanded nodes of original nodes based on information of the original nodes to obtain non-duplicate expanded nodes of the original nodes; and add the non-duplicate nodes of the original node to the graph carrier document to obtain the optimized graph carrier document, in response to determining an original node with a largest number of non-duplicate nodes having a highest quality.

In some optional implementations of the present disclosure, the optimization unit is configured to: in response to detecting that the drop position is located at the position of a node of the graph carrier document in the file upload hot zone, add a corresponding child node to the node based on the selected file to obtain the optimized graph carrier document.

In some optional implementations of the present disclosure, the apparatus 400 further includes an association unit (not shown in the figure), which is configured to: associate each node in the optimized graph carrier document with the selected file; and when a user operates a tracking tag of an information source of a node, display the selected file associated with the node.

The apparatus for generating information provided by the embodiment of the present disclosure first uses the file acquisition unit 401 to acquire a file selected by a user from at least one type of file; second, uses the information acquisition unit 402 to, in response to detecting that a graph carrier document is presented on the current display interface, acquire in real time operation information of the user on the selected file; third, uses the determination unit 403 to determine, based on the operation information, a drop position of the selected file relative to a file upload hot zone (the file upload hot zone being a region in which the graph carrier document is displayed); and finally, uses the optimization unit 404 to optimize the graph carrier document based on the drop position and the selected file to obtain an optimized graph carrier document. In this way, by means of the drop position of the selected file relative to the file upload hot zone and the selected file itself, the pre-generated graph carrier document is optimized, thereby consolidating information from multiple types of files, improving the richness of the optimized graph carrier document, and ensuring the comprehensiveness of generating information for the graph carrier document.

In the technical solutions of the present disclosure, the collection, storage, use, processing, transmission, provision, disclosure, and other processing of user personal information involved all comply with the provisions of relevant laws and regulations and do not violate public order and good customs.

According to the embodiments of the present disclosure, the present disclosure further provides an electronic device, a readable storage medium, and a computer program product.

FIG. 5 shows a schematic block diagram of an exemplary electronic device 500 that can be used to implement the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions are merely examples, and are not intended to limit the implementations of the present disclosure described and/or required herein.

As shown in FIG. 5, the device 500 includes a computing unit 501, which can execute various appropriate actions and processes according to a computer program stored in a read-only memory (ROM) 502 or a computer program loaded into a random access memory (RAM) 503 from a storage unit 508. In the RAM 503, various programs and data required for the operation of the device 500 can also be stored. The computing unit 501, the ROM 502, and the RAM 503 are connected to each other through a bus 504. An input/output (I/O) interface 505 is also connected to the bus 504.

Multiple components in the device 500 are connected to the I/O interface 505, including: an input unit 506 (e.g., a keyboard, a mouse); an output unit 507 (e.g., various types of displays, speakers); a storage unit 508 (e.g., a magnetic disk, an optical disk); and a communication unit 509 (e.g., a network card, a modem, a wireless communication transceiver). The communication unit 509 allows the device 500 to exchange information/data with other devices through a computer network such as the Internet and/or various telecommunication networks.

The computing unit 501 may be various general-purpose and/or special-purpose processing components with processing and computing capabilities. Some examples of the computing unit 501 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 501 executes the various methods and processes described above, such as the method for generating information. For example, in some embodiments, the method for generating information may be implemented as a computer software program, which is tangibly contained in a machine-readable medium such as the storage unit 508. In some embodiments, part or all of the computer program may be loaded and/or installed on the device 500 via the ROM 502 and/or the communication unit 509. When the computer program is loaded into the RAM 503 and executed by the computing unit 501, one or more steps of the method for generating information described above may be executed. Alternatively, in other embodiments, the computing unit 501 may be configured to execute the method for generating information in any other suitable manner (e.g., by means of firmware).

Various implementations of the systems and technologies described herein may be implemented in a digital electronic circuit system, an integrated circuit system, a field-programmable gate array (FPGA), an application-specific integrated circuit (ASIC), an application-specific standard product (ASSP), a system-on-a-chip (SOC), a complex programmable logic device (CPLD), computer hardware, firmware, software, and/or combinations thereof. These various implementations may include: being implemented in one or more computer programs that may be executed and/or interpreted on a programmable system including at least one programmable processor, which may be a special-purpose or general-purpose programmable processor that may receive data and instructions from a storage system, at least one input device, and at least one output device, and transmit data and instructions to the storage system, the at least one input device, and the at least one output device.

Program codes used to implement the method of the present disclosure may be written in any combination of one or more programming languages. These program codes may be provided to a processor or controller of a general-purpose computer, a special-purpose computer, or other programmable generating information devices, so that the program codes, when executed by the processor or controller, cause the functions/operations specified in the flowcharts and/or block diagrams to be implemented. The program codes may be executed entirely on a machine, partially on the machine, partially on the machine and partially on a remote machine, or entirely on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

To provide interaction with a user, the systems and technologies described herein may be implemented on a computer having: a display device (e.g., a cathode ray tube (CRT) or a liquid crystal display (LCD) monitor) for displaying information to the user; and a keyboard and a pointing device (e.g., a mouse or a trackball) through which the user may provide input to the computer. Other types of devices may also be used to provide interaction with the user; for example, feedback provided to the user may be any form of sensory feedback (e.g., visual feedback, auditory feedback, or tactile feedback); and input from the user can be received in any form, including acoustic input, speech input, or tactile input.

The systems and technologies described herein may be implemented in a computing system that includes a background component (e.g., as a data server), or a middleware component (e.g., an application server), or a front-end component (e.g., a user computer with a graphical user interface or a web browser through which the user can interact with an implementation of the systems and technologies described herein), or any combination of such background, middleware, or front-end components. The components of the system can be interconnected by any form or medium of digital data communication (e.g., a communication network). Examples of communication networks include: a local area network (LAN), a wide area network (WAN), and the Internet.

The computer system may include a client and a server. The client and server are generally remote from each other and typically interact through a communication network. The relationship between the client and the server is generated by computer programs running on the respective computers and having a client-server relationship with each other.

It should be understood that the various forms of processes shown above can be reordered, added, or deleted. For example, the steps described in the present disclosure may be executed in parallel, sequentially, or in a different order, as long as the desired results of the technical solutions of the present disclosure can be achieved, and no limitation is imposed herein.

The above specific implementations do not limit the protection scope of the present disclosure. Those skilled in the art should understand that various modifications, combinations, sub-combinations, and substitutions can be made according to design requirements and other factors. Any modification, equivalent replacement, and improvement made within the spirit and principle of the present disclosure should be included in the protection scope of the present disclosure.

## Claims

1. A method for generating information, the method comprising:
acquiring a file selected by a user from at least one type of file;
acquiring in real time operation information of the user on the selected file, in response to detecting that a graph carrier document is presented on a current display interface;
determining, based on the operation information, a drop position of the selected file relative to a file upload hot zone, wherein the file upload hot zone is a region where the graph carrier document is displayed; and
optimizing the graph carrier document based on the drop position and the selected file to obtain an optimized graph carrier document.

2. The method according to claim 1, further comprising:
in response to detecting that no graph carrier document is presented on the current display interface, generating the file upload hot zone on the current display interface;
acquiring in real time the operation information of the user on the selected file;
determining a drop region of the selected file relative to the file upload hot zone based on the operation information;
generating, in response to detecting that the drop region matches a region where the file upload hot zone is located, the graph carrier document based on the selected file; and
displaying the graph carrier document in the file upload hot zone.

3. The method according to claim 2, wherein the generating, in response to detecting that the drop region matches a region where the file upload hot zone is located, the graph carrier document based on the selected file comprises:
in response to detecting that the drop region matches the region where the file upload hot zone is located, inputting the selected file and a carrier guide word into a large language model to obtain the graph carrier document output by the large language model.

4. The method according to claim 2, wherein the generating, in response to detecting that the drop region matches a region where the file upload hot zone is located, the graph carrier document based on the selected file comprises:
in response to detecting that the drop region matches the region where the file upload hot zone is located, inputting the selected file and a graph guide word into a large language model to obtain a knowledge graph output by the large language model;
acquiring carrier requirement information input by the user; and
generating the graph carrier document based on the knowledge graph and the carrier requirement information.

5. The method according to claim 4, wherein the generating, in response to detecting that the drop region matches a region where the file upload hot zone is located, the graph carrier document based on the selected file comprises:
generating a requirement guide word based on the carrier requirement information; and
inputting the requirement guide word and the knowledge graph into the large language model to obtain the graph carrier document output by the large language model.

6. The method according to any one of claims 1-5, wherein the optimizing the graph carrier document based on the drop position and the selected file to obtain the optimized graph carrier document comprises:
supplementing, in response to detecting that the drop position is located in a blank area of the file upload hot zone, entire document information of the graph carrier document based on the selected file to obtain the optimized graph carrier document.

7. The method according to claim 6, wherein the supplementing, in response to detecting that the drop position is located in a blank area of the file upload hot zone, entire document information of the graph carrier document based on the selected file to obtain the optimized graph carrier document comprises:
in response to detecting that the drop position is located in the blank area of the file upload hot zone, expanding each original node on the graph carrier document based on the selected file to obtain an expanded node of each original node;
removing duplicated expanded nodes of original nodes based on information of the original nodes to obtain non-duplicate expanded nodes of the original nodes; and
adding the non-duplicate nodes of the original node to the graph carrier document to obtain the optimized graph carrier document, in response to determining an original node with a largest number of non-duplicate nodes having a highest quality.

8. The method according to any one of claims 1-5, wherein the optimizing the graph carrier document based on the drop position and the selected file to obtain an optimized graph carrier document comprises:
in response to detecting that the drop position is located at a position of a node of the graph carrier document in the file upload hot zone, adding a corresponding child node to the node based on the selected file to obtain the optimized graph carrier document.

9. The method according to claim 1, further comprising:
associating each node in the optimized graph carrier document with the selected file; and
when the user performs an operation on a tracking tag of an information source of a node, displaying the selected file associated with the node.

10. An apparatus for generating information, the apparatus comprising:
a file acquisition unit configured to acquire a file selected by a user from at least one type of file;
an information acquisition unit configured to acquire in real time operation information of the user on the selected file, in response to detecting that a graph carrier document is presented on a current display interface;
a determination unit configured to determine, based on the operation information, a drop position of the selected file relative to a file upload hot zone, wherein the file upload hot zone is a region where the graph carrier document is displayed; and
an optimization unit configured to optimize the graph carrier document based on the drop position and the selected file to obtain an optimized graph carrier document.

11. The apparatus according to claim 10, further comprising a generation unit configured to:
in response to detecting that no graph carrier document is presented on the current display interface, generate the file upload hot zone on the current display interface;
acquire in real time the operation information of the user on the selected file;
determine a drop region of the selected file relative to the file upload hot zone based on the operation information;
in response to detecting that the drop region matches a region where the file upload hot zone is located, generate a graph carrier document based on the selected file; and
display the graph carrier document in the file upload hot zone.

12. The apparatus according to claim 11, wherein the generation unit is further configured to:
in response to detecting that the drop region matches the region where the file upload hot zone is located, input the selected file and a carrier guide word into a large language model to obtain the graph carrier document output by the large language model.

13. The apparatus according to claim 11, wherein the generation unit is further configured to:
in response to detecting that the drop region matches the region where an initial upload zone is located, input the selected file and a graph guide word into a large language model to obtain a knowledge graph output by the large language model;
acquire carrier requirement information input by the user; and
generate the graph carrier document based on the knowledge graph and the carrier requirement information.

14. The apparatus according to claim 13, wherein the generation unit is further configured to:
generate a requirement guide word based on the carrier requirement information; and
input the requirement guide word and the knowledge graph into the large language model to obtain the graph carrier document output by the large language model.

15. The apparatus according to any one of claims 10-14, wherein the optimization unit is configured to:
supplement, in response to detecting that the drop position is located in a blank area of the file upload hot zone, entire document information of the graph carrier document based on the selected file to obtain the optimized graph carrier document.

16. The apparatus according to claim 15, wherein the optimization unit is further configured to:
in response to detecting that the drop position is located in the blank area of the file upload hot zone, expand each original node on the graph carrier document based on the selected file to obtain an expanded node of each original node;
removing duplicated expanded nodes of original nodes based on information of the original nodes to obtain non-duplicate expanded nodes of the original nodes; and
add the non-duplicate expanded nodes of the original node to the graph carrier document to obtain the optimized graph carrier document, in response to determining an original node with a largest number of non-duplicate nodes having a highest quality.

17. The apparatus according to any one of claims 10-14, wherein the optimization unit is configured to:
in response to detecting that the drop position is located at a position of a node of the graph carrier document in the file upload hot zone, add a corresponding child node to the node based on the selected file to obtain the optimized graph carrier document.

18. The apparatus according to claim 10, further comprising an association unit configured to:
associate each node in the optimized graph carrier document with the selected file; and
when the user performs an operation on a tracking tag of an information source of a node, display the selected file associated with the node.

19. An electronic device, comprising:
at least one processor; and
a memory communicatively connected to the at least one processor,
wherein the memory stores instructions executable by the at least one processor, and the instructions are executed by the at least one processor to enable the at least one processor to perform the method according to any one of claims 1-9.

20. A non-transitory computer-readable storage medium storing computer instructions, wherein the computer instructions are used to cause a computer to perform the method according to any one of claims 1-9.

21. A computer program product, comprising a computer program, wherein the computer program, when executed by a processor, implements the method according to any one of claims 1-9.
